(19) Europäisches Patentamt / European Patent Office / Office européen des brevets

(11) **EP 3 688 407 B1**

(12) **EUROPEAN PATENT SPECIFICATION**

(45) Date of publication and mention
of the grant of the patent:
**31.07.2024 Bulletin 2024/31**

(21) Application number: **18862388.8**

(22) Date of filing: **25.09.2018**

(51) International Patent Classification (IPC):
*G01B 11/25* (2006.01)        *G06T 7/00* (2017.01)
*G06T 7/521* (2017.01)        *G06T 7/55* (2017.01)

(52) Cooperative Patent Classification (CPC):
**G01B 11/2531; G01B 11/2513; G01B 11/2536;
G06T 7/521; G06T 7/55**

(86) International application number:
**PCT/SG2018/050487**

(87) International publication number:
**WO 2019/066724 (04.04.2019 Gazette 2019/14)**

(54) **LIGHT PROJECTION SYSTEMS**

LICHTPROJEKTIONSSYSTEME

SYSTÈMES DE PROJECTION DE LUMIÈRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.09.2017 US 201762563880 P**

(43) Date of publication of application:
**05.08.2020 Bulletin 2020/32**

(73) Proprietor: **AMS Sensors Singapore Pte. Ltd.
Singapore 569877 (SG)**

(72) Inventors:
• **ROSSI, Markus
5656 AE Eindhoven (NL)**

• **CUTU, Florin
5656 AE Eindhoven (NL)**

(74) Representative: **Viering, Jentschura & Partner
mbB
Patent- und Rechtsanwälte
Am Brauhaus 8
01099 Dresden (DE)**

(56) References cited:
CN-A- 107 063 128       US-A- 5 135 309
US-A1- 2009 195 772     US-A1- 2013 278 723
US-A1- 2015 022 644     US-A1- 2015 330 775
US-A1- 2016 335 492     US-B2- 6 559 954
US-B2- 8 325 350

## Description

CROSS-REFERENCE TO RELATED APPLICATION(S)

This application claims the benefit of and priority to U.S. Provisional Patent Application No. 62/563,880, filed September 27, 2017.

TECHNICAL FIELD

The present disclosure relates generally to light projection systems.

BACKGROUND

Light projection systems are used in a variety of applications to cast a pattern of light upon a surface. For example, light projection systems can be used in determining the three-dimensional shape of objects. In three-dimensional shape measurement, or three-dimensional mapping, a structured light pattern, for example, can be projected onto an object or scene. In some applications, a light source projects a structured light pattern onto a scene that includes one or more objects of interest. In some structured-light assemblies, a pattern is projected onto a subject, an image of the pattern is obtained, the projected pattern is compared to the collected pattern, and differences between the two patterns are correlated with depth information. Thus, distortions in the pattern are correlated with depth. Such techniques can be useful for low-light and low-texture objects or scenes because the structured light can provide additional texture (e.g., for matching pixels in stereo images).

In some applications, projecting an irregular light pattern (i.e., a non-periodic light pattern) provides advantages. However, manufacturing an irregular array of light sources arranged to produce an irregular light pattern can be relatively costly. Examples of systems and methods for three-dimensional imaging by projection of periodic patterns are described in US 8,325,350 B2, US 2009/195772 A1, and US 6,559,954 B2.

SUMMARY

As mentioned above, the ability to project an irregular (i.e., non-periodic or non-repetitive) light pattern can provide advantages for three-dimensional mapping. However, manufacturing an irregular array of light emitting devices configured to produce an irregular light pattern can be costly. The present disclosure describes techniques for obtaining three-dimensional data (e.g., disparity or distance information) by projecting regular (e.g., periodic or repetitive) light patterns onto an object or scene of interest. The techniques can be accomplished, in some cases, without using an irregular array of light emitting elements.

Described herein is a method according to claim 1, appended hereto, and an optoelectronic system according to claim 9, appended hereto. Preferred embodiments are defined in the dependent claims.

Some implementations include one or more of the following features. For example, the imaging module can include a plurality of pixels. In some instances, each illumination module is characterized by a baseline, and the baselines are different from one another. In some cases, each illumination module has a focusing distance, and the focusing distances are substantially equal. The imaging module can have an imaging distance, for example, that is substantially equal to any of the focusing distances.

In some implementations, the periods of the light patterns are substantially different from each other, and the minimum disparity values are substantially different from each other. Further, in some instances, each plurality of ambiguity values is characterized by a maximum value related to the minimum distance, and a minimum.

In some cases, the non-transitory computer-readable medium comprises instructions stored thereon that, when executed by the processor, cause the processor to perform a further operation of deriving a collection of possible disparity values from: the period of the corresponding light pattern, the plurality of ambiguity values of the corresponding scene-reflected portion, the minimum disparity value of the corresponding scene-reflected portion, the baseline and the focusing distance of the corresponding illumination module, the imaging distance of the imaging module, and the pixel size.

In some instances, the extent of the collection of possible disparity values is proportional to the plurality of ambiguity values of the corresponding reflected portion. In some implementations, each of the illumination modules includes a respective periodic array of light emitting elements.

The disclosure also describes a host device according to claim 15 that includes an optoelectronic system as described herein, wherein the host device is operable to use the three-dimensional data of the scene determined by the optoelectronic system for one or more functions executed by the host device.

The systems and methods described here can be used in conjunction with structured light projection systems, as well as stereoscopic light projection systems.

Other aspects, features and advantages will be readily apparent from the following detailed description, the accompanying drawings and the claims.

BRIEF DESCRIPTION OF THE DRAWINGS

FIG. 1 is a flow chart of a method of obtaining three-dimensional data of a scene.
FIG. 2 illustrates an example of an optoelectronic system for collecting three-dimensional data of a scene.

FIG. 3 illustrates an example of a regular light pattern.

FIG. 4 illustrates various dimensions of the system of FIG. 2.

FIGS. 5A and 5B (collectively FIG. 5) illustrate an example of a process flow for obtaining three-dimensional data of a scene.

FIG. 6 illustrates another example of an optoelectronic system for collecting three-dimensional data of a scene.

DETAILED DESCRIPTION

The present disclosure describes techniques for projecting an irregular (i.e., non-periodic or non-repetitive) light pattern that does not require an irregular array of light emitting devices. Three-dimensional data (e.g., disparity or distance information) can be obtained by projecting regular (e.g., periodic, quasi-periodic or repetitive) light patterns onto an object or scene of interest.

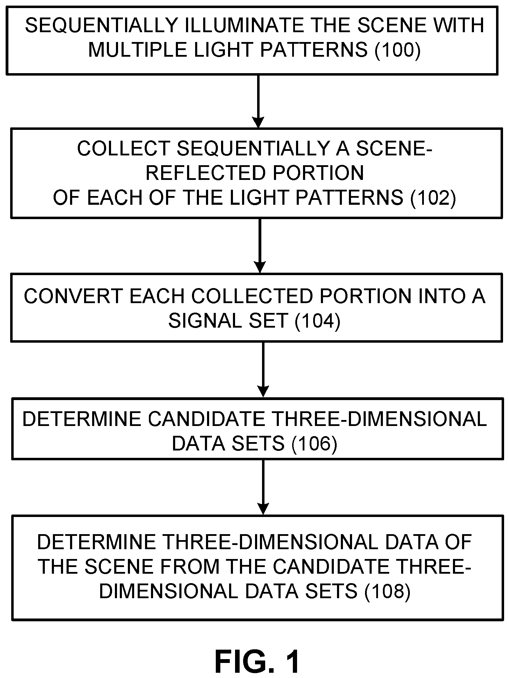

In one aspect, the disclosure describes a method for collecting, over a minimum and a maximum distance, three-dimensional data of a scene using an optoelectronic system. As indicated by FIG. 1, the method includes sequentially illuminating the scene with multiple light patterns, each of which has a respective period (100). A scene-reflected portion of each of the light patterns is collected sequentially (102), and each collected portion is converted into a signal set (104), wherein each scene-reflected portion is characterized by ambiguity values and a minimum disparity value, where each signal set corresponds to a respective one of the light patterns. The method further includes determining candidate three-dimensional data sets (106), wherein each candidate three-dimensional data set is determined from a respective one of the signal sets. The method also includes determining three-dimensional data of the scene from the candidate three-dimensional data sets (108).

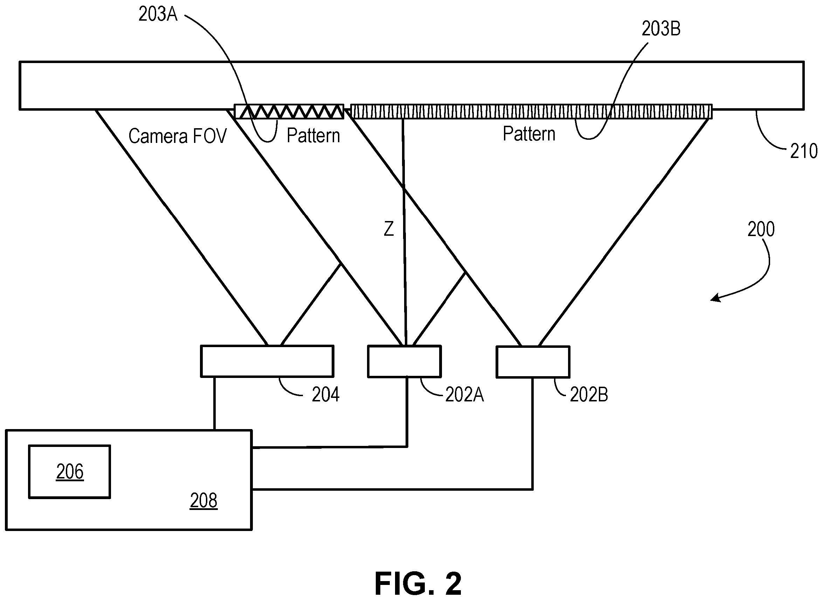

FIG. 2 illustrates an example of an optoelectronic system 200 for collecting three-dimensional data of a scene over a minimum and maximum distance and for implementing the methods described here. The system 200 includes multiple illumination modules 202A, 202B, each of which is operable to generate a respective light pattern 203A, 203B having a respective period T1, T2. The system includes an imaging module 204 operable to collect a scene-reflected portion of each of the light patterns and further operable to convert each collected portion into a signal set, wherein each scene-reflected portion is characterized by ambiguity values (i.e., a set of possible disparity vales) and a minimum disparity value, and wherein each signal set corresponds to a respective one of the light patterns. The system 200 includes a non-transitory computer-readable 206 medium (e.g., ROM other memory) comprising instructions stored thereon that, when executed by a processor 208, cause the processor to perform operations for determining candidate three-dimensional data sets, wherein each candidate three-dimensional data set is determined from a respective one of the signal sets. The processor 208 is operable to perform further operations for determining three-dimensional data of the scene from the candidate three-dimensional data sets.

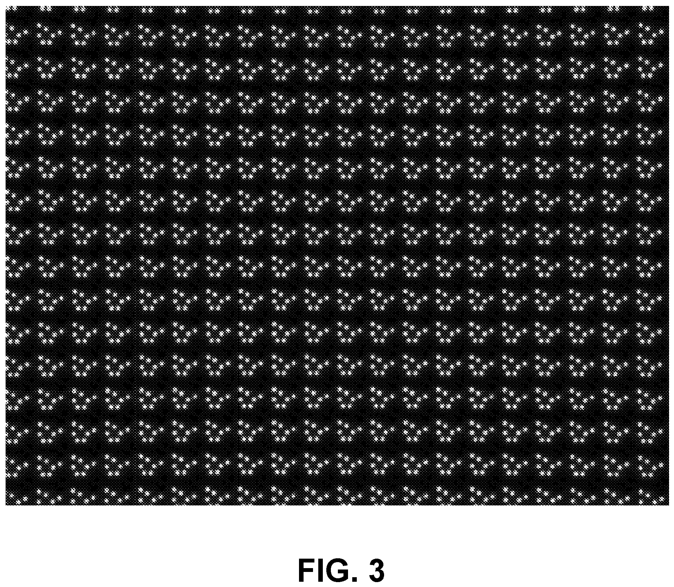

The following paragraphs describe further details according to some implementations that use two illumination modules 202A, 202B, each of which is operable to produce and project a respective light pattern 203A, 203B. The patterns 203A, 203B can be for example, regular (e.g., periodic; repetitive) or quasi-periodic. An example of such a light pattern is illustrated in FIG. 3.

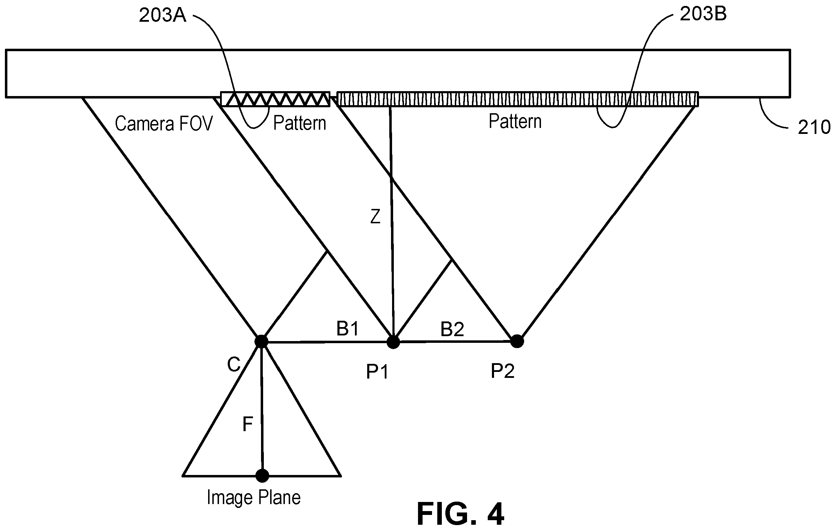

In the example of FIG. 4, it is assumed that the first illumination module 202A is operable to produce a periodic first light pattern 203A (e.g., a pattern of dots, stripes or curves) having a period T1. The baseline B1 for the first illumination module 202A is the distance from the optical center of the module 202A to the optical center C of the imaging module 204. In FIG. 4, it is further assumed that the second illumination module 202B is operable to produce a second periodic light pattern 203B (e.g., of dots, stripes or curves) having a period T2, which differs from the period T1. In some instances, the patterns 203A, 203B may be slightly tilted with respect to the epipolar line and with respect to each other. Thus, in some cases the light patterns may be rotated relative to one another. The baseline B2 for the second illumination module 202B is the distance from the optical center of the module 202B to the optical center C of the imaging module 204. In FIG. 4, the distance from the illumination modules 202A, 202B and the imaging module 204 to a surface on which the light patterns are projected is indicated by Z. The distance value Z also may be referred to as a depth value. Further, in FIG. 4, F represents the focal length of the illumination modules 202A, 202B and the imaging module 204.

Each of the illumination modules 202A, 202B can be implemented, for example, by a respective regular (e.g., periodic) array of light emitting elements such as laser diodes or vertical cavity surface emitting lasers (VCSELs). The baselines B1, B2 for the illumination modules 202A, 202B preferably differ from one another. On the other hand, the focusing distances for the illumination modules 202A, 202B can be substantially the same. The imaging module 204 can be implemented, for example, as a CMOS or other camera that includes pixels, each of which has a particular pixel size.

In general, disparity d can be determined as follows:

$$d = (B^*F)/Z,$$

where B is the baseline, F is the focal length, and Z is the distance to an object in the scene. Each light pattern 203A, 203B is used to generate a one parameter-family of solutions for depth. Thus, each light pattern 203A, 203B is used to generate a respective set of possible disparity values, which correspond to possible values of the depth or distance Z. In particular, assuming a light pattern having a period T, the disparity d can be calculated as an unknown multiple of the period T:

$$d = d_0 + nT,$$

where $d_0$ represents the minimum possible disparity (i.e., the minimum possible shift or displacement) between a reference pattern and the input pattern. The reference pattern can be obtained, for example, during factory calibration and can be stored in memory coupled to the processor 208. In the foregoing equation, "n" is an unknown integer $\geq 0$ and represents the ambiguity in the value of the disparity. The ambiguity results from the fact that, using a single light pattern having a period T, there are multiple possible values for the disparity (i.e., $d = d_0 + nT$). Thus, using a single periodic light pattern results in a family or set of possible solutions for the disparity.

In operation, the illumination modules 202A, 202B sequentially illuminate a scene 210. For example, the modules 202A, 202B can project their respective light patterns onto the scene in short pulses, one after the other. In some implementations, the first module 203A briefly projects the first light pattern 203A onto the scene 210, followed by the second module briefly projecting the second light pattern 203B onto the scene. The processor 208 can be used to control the ON/OFF operation of the respective illumination modules 202A, 202B. When each respective light pattern illuminates the scene 210, a portion of the light reflected by the scene is captured by the imaging module 204, which converts the detected light into a signal set that can be provided to the processor 208. The processor 208 is operable, as explained in greater detail below, to process the signal sets generated by the imaging module 204 to determine a disparity value and, thus, a value indicative of the distance (or depth) Z to the scene 210.

In accordance with the present disclosure, the processor 208 is operable to use the signals detected by the imaging module 204 - based on multiple light patterns 203A, 203B having different respective periods - to narrow down the possible values for "n" and thereby determine the correct disparity value d and the depth Z. This can be accomplished because the depth Z is assumed to be the same regardless of which illumination module 202A, 202B is being used to project the light pattern onto the scene 210. The processor 208 is operable to identify an intersection of possible disparity values based on signals detected by the imaging module 204 when the first light pattern 203A is projected onto the scene and of possible disparity values based on signals detected by the imaging module 204 when the second light pattern 203B is projected onto the scene.

Mathematically, identifying the intersection of possible disparity values is equivalent to finding possible

integer values for $(n_1, n_2)$ pairs, where

$$(d_{01} + n_1 T_1)/B_1 = (d_{02} + n_2 T_2)/B_2,$$

and where $d_{01}$, and $d_{02}$ represent the minimum possible disparities, respectively, for the first and second light patterns 203A, 203B. All values other than $n_1$ and $n_2$ are known and can be stored, for example, in memory coupled to the processor 208.

The processor 208 also applies another practical constraint to narrow down the possible values for $(n_1, n_2)$ pairs. In particular, some of the possible disparity values d correspond to respective depth or distance values Z that are unrealistically small in view of the physical dimensions of the system. Thus, a minimum distance $Z_{min}$ can be defined and stored, for example, in memory during factory calibration such that values of $(n_1, n_2)$ pairs that correspond to distance values smaller than the minimum distance $Z_{min}$ are ignored or discarded by the processor.

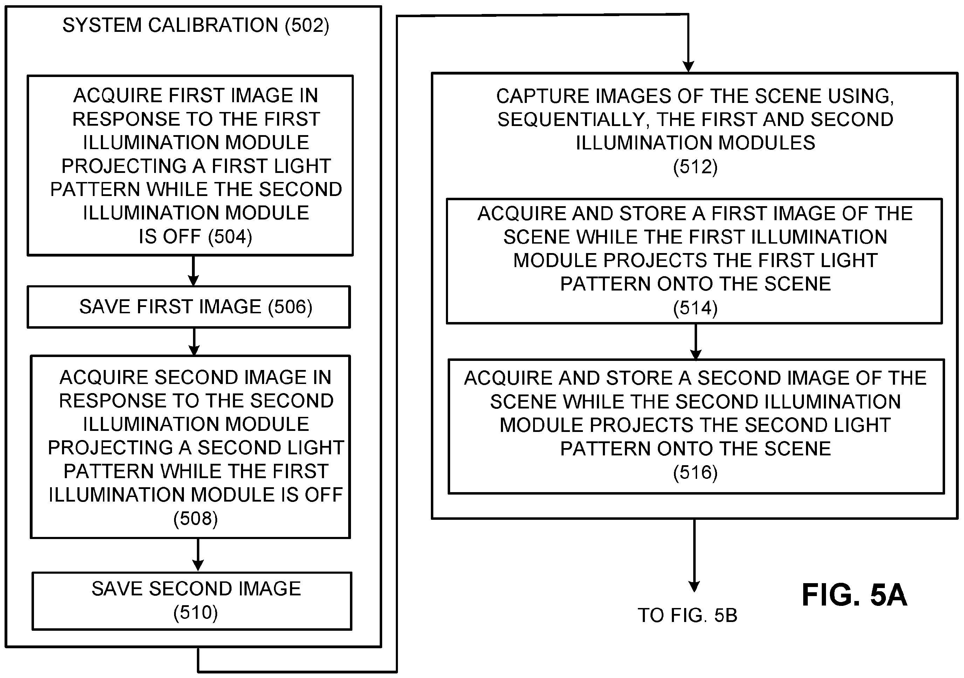

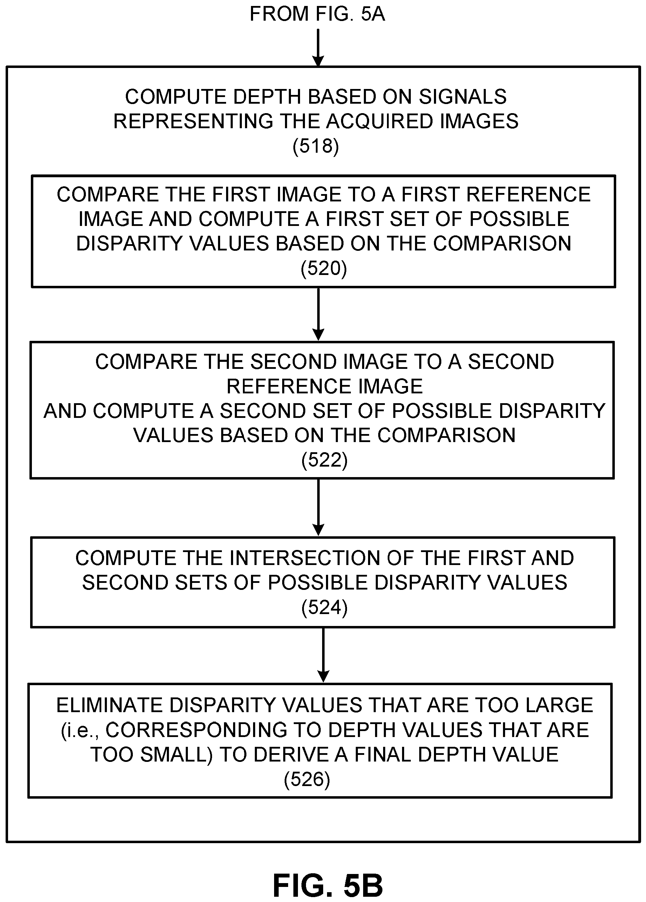

FIG. 5 illustrates a process flow in accordance with some implementations. As indicated at 502, calibration of the system can be performed, for example, during the manufacture process. Thus, the imaging module 204 can be placed at a known distance in front of a wall, with the optical axis of the imaging module set perpendicular to the wall. As part of the calibration, a first image is acquired by the imaging module 204 in response to the first illumination module 202A projecting the first light pattern 203A onto the wall while the second illumination module 202B is off (504). The first image can be saved as a first reference image in memory associated with the processor 208 (506). Further, a second image is acquired by the imaging module 204 in response to the second illumination module 202B projecting the second light pattern 203B onto the wall while the first illumination module 202A is off (508). The second image can be saved as a second reference image in memory associated with the processor 208 (510).

To measure the depth of an object in a scene, the imaging module 204 captures images of the scene using, sequentially, the first and second illumination modules 202A, 202B (512). Thus, the imaging module 204 acquires and stores a first image of the scene while the first illumination module 202A projects the first light pattern 203A onto the scene (514) and acquires and stores a second image of the scene while the second illumination module 202B projects the second light pattern 203B onto the scene (516). When the first image is acquired, the second illumination module 202B is off (i.e., the second light pattern 203B is not projected onto the scene), and when the second image is acquired, the first illumination module 202A is off (i.e., the first light pattern 203A is not projected onto the scene). Neither the object in the scene nor the imaging module should move during the interval when the two images are acquired.

Next, the processor 208 computes the depth Z based on signals representing the acquired images (518). Thus, the processor 208 compares the first image acquired to the first reference image (acquired during calibration) and computes a first set of possible disparity values based on the comparison (520). This first set of possible values corresponds to the set of values that $n_1$ can take. The processor 208 also compares the second image to the second reference image (acquired during calibration) and computes a second set of possible disparity values based on the comparison (522). This second set of possible values corresponds to the set of values than $n_2$ can take.

The processor 208 then computes the intersection of the first and second sets of possible disparity values so as to narrow down the possible disparity values that correspond to the true disparity value (524). The processor can compute the intersection, for example, by exploiting the mathematical relation between $n_1$ and $n_2$:

$$n_2 = a + (b * n_1),$$

where

$$a = \frac{(d_{01}/B_1) - (d_{02}/B_2)}{(T_2/B_2)}$$

and

$$b = \frac{(T_1 * B_2)}{(T_2 * B_1)}$$

The processor 208 then eliminates disparity values that are too large (corresponding to Z values that are too small) to derive a final depth value Z (526). The processor 208 eliminates, for example, disparity values corresponding to respective distance values Z that are unrealistically small (i.e., $< Z_{min}$) in view of the physical dimensions of the system. In particular, values of $(n_1, n_2)$ pairs that correspond to distance or depth values smaller than the minimum distance $Z_{min}$ are ignored. The $(n_1, n_2)$ pair that corresponds to the smallest depth value equal to, or greater than, $Z_{min}$ is assumed to be the true depth value Z. The foregoing steps can be repeated as desired so as to derive disparity (and depth) data for multiple points in the scene. The value of $Z_{min}$ can be stored, for example, in memory associated with the processor 208 during system calibration.

The process by which the processor 208 determines the $(n_1, n_2)$ pair that corresponds to the true disparity also can be expressed as follows. The correct value of $n_1$ can be found by testing possible integer values of $n_1$ in the range from ceil(-a/b) to $(n_1)_{max}$, where ceil(-a/b) is the ceiling function, which maps a/b to the smallest integer greater than or equal to a/b. The valid value for $n_1$ results in an integer $n_2 = a + b*n_1$ that is in the range of 0 to $(n_2)_{max}$.

Although the foregoing examples are implemented using two illumination modules 202A, 202B, a greater number of illumination modules can be used in some cases. In such instances, each illumination module can project a periodic light pattern having a respective period that differs from the light pattern projected by the other illumination patterns.

As shown in FIG. 2, the system may include a single imaging module 204. In such instances, the system can be used as a structured light system in which distortions in the collected pattern(s) correlate with depth. Such techniques can be useful, for example, for low-light and low-texture objects or scenes.

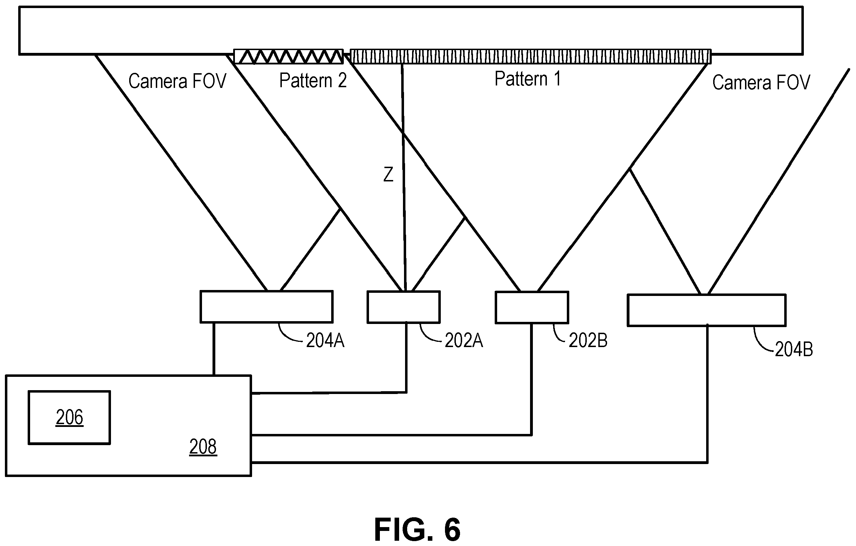

In some implementations, as shown in FIG. 6, the system 200 includes multiple imaging modules 204A, 204B, which allows stereoscopic images to be acquired and processed to produce three-dimensional depth information. In stereoscopic image capture, two (or more) imagers are spatially separated by a baseline distance. Depth information can be extracted from the measured disparity between matched pixels in each image, and the focal length of the imagers. Sometimes, an object or scene may possess either high-and low-texture or high and low-light regions, where combinations of both stereoscopic and structured-light image capture are useful for generating depth information of the entire scene.

Depending on the implementation, the illumination modules 202A, 202B may be operable to produce light patterns in the visible range, in the infra-red (IR) range and/or the ultra-violet (UV) range.

The systems and methods described above for creating and projecting light and determining disparity values can be used, for example, in association with various imaging systems, such as three-dimensional imaging and video systems. Further, light projection systems as described above, or modules incorporating such light projection systems, can be integrated into a wide range of host devices such as smartphones, laptops, wearable devices and other computing devices that may have with networking capability, as well as automobiles. The host devices may include processors and other electronic components, and other supplemental modules configured to collect data, such as cameras, time-of-flight imagers. Other supplemental modules may be included such as ambient lighting, display screens, automotive headlamps, and the like. The host devices may further include nonvolatile memory where instructions for operating the optoelectronic modules, and in some instances the supplemental modules, are stored.

Modules incorporating light projection system as described above can, in some instances, obtain more accurate data than other techniques. Thus, functions performed by the host device based on signals generated by the light projection system can be performed more accurately, thereby conferring substantial advantages to the smartphone or other host device.

Various aspects of the subject matter and the functional operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer program products, i.e., one or more modules of computer program instructions encoded on a computer readable medium for execution by, or to control the operation of, data processing apparatus. The computer readable medium can be a non-transitory machine-readable storage device, a machine-readable storage substrate, a memory device, a composition of matter effecting a machine-readable propagated signal, or a combination of one or more of them. The terms "data processing apparatus" and "computer" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them.

A computer program (also known as a program, software, software application, script, or code) can be written in any form of programming language, including compiled or interpreted languages, and it can be deployed in any form, including as a stand alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile computing device such as a smartphone, a tablet, a personal data assistant (PDA), a notebook computer or other device with networking capability. Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

While this document contains many details, these should not be construed as limitations on the scope of what may be claimed, but rather as descriptions of features specific to particular examples. Certain features that are described in this specification in the context of separate implementations can also be combined. Conversely, various features that are described in the context of a single implementation also can be implemented in multiple embodiments separately or in any suitable subcombination as long as within the scope of the invention as defined by the appended claims.

A number of embodiments have been described. Nevertheless, various modifications may be made without departing from the scope of the invention as defined by the appended claims.

## Claims

1. A method for collecting, over a minimum and a maximum distance, three-dimensional data of a scene (210) using an optoelectronic system (200), wherein the minimum distance corresponds to a smallest realistic distance dictated by one or more physical dimensions of the optoelectronic system (200), the method comprising:

   sequentially illuminating the scene (210) with a plurality of light patterns (203A, 203B), wherein each light pattern (203A, 203B) has a different respective period, T;
   sequentially collecting a scene-reflected portion of each of the light patterns and converting each collected portion into a respective signal set, wherein each scene-reflected portion is **characterized by** a respective plurality of possible disparity values, d, each possible disparity value, d, corresponding to a possible value of depth or distance (Z) wherein each possible disparity value, d, is calculated as an unknown multiple of the period, T, by:

$$d = d_0 + nT;$$

wherein $d_0$ is a minimum disparity value, and n represents a plurality of ambiguity values, wherein each signal set corresponds to a respective one of the light patterns (203A, 203B); and discarding disparity values corresponding to distances smaller than the minimum distance, and

determining three-dimensional data of the scene (210) from the signal sets, wherein determining three-dimensional data of the scene (210) comprises identifying an intersection of possible disparity values for the plurality of light patterns (203A, 203B).

2. The method of claim 1, wherein sequentially illuminating the scene (210) with a plurality of light patterns (203A, 203B) includes generating each light pattern (203A, 203B) from a respective illumination module (202A, 202B), and sequentially collecting the scene-reflected portion of each of the light patterns (203A, 203B) includes collecting the scene-reflected portions with an imaging module (204, 204A, 204B) wherein the imaging module (204, 204A, 204B) has a plurality of pixels.

3. The method of claim 2, wherein the illumination modules (202A, 202B) have different respective baselines (B, B2), and the illumination modules (202A, 202B) have substantially equal focusing distances and the imaging module (204, 204A, 204B) has an imaging distance; and, optionally wherein the imaging distance is substantially equal to an individual focusing distance.

4. The method of claim 1, wherein the periods are substantially different from each other, and the minimum disparity values are different from each other.

5. The method of claim 1, wherein each plurality of ambiguity values is **characterized by** a maximum value related to the minimum distance, and a minimum value substantially equal to zero.

6. The method of claim 1, wherein the possible disparity values are additionally derived from:

a) the baseline (B1, B2) and the focusing distance of the corresponding illumination module (202A, 202B),
b) the imaging distance of the imaging module (204, 204A, 204B), and
c) the pixel size.

7. The method of claim 6, wherein determining three-dimensional data of the scene (210) includes determining a plurality of optoelectronic system constants; and, optionally wherein determining three-dimensional data of the scene includes using at least a portion of the optoelectronic system constants to select one ambiguity value from the plurality of ambiguity values for each corresponding light pattern (203A, 203B).

8. The method of claim 7, further including using a ceiling function to select one ambiguity value from the plurality of ambiguity values for at least one corresponding light pattern (203A, 203B), and, optionally including selecting one disparity value for each corresponding light pattern (203A, 203B) from the corresponding collection of possible disparity values using the selected one ambiguity value corresponding to the same light pattern (203A, 203B), and the minimum disparity value corresponding to the same light pattern (203A, 203B).

9. An optoelectronic system (200) for collecting three-dimensional data of a scene (210) over a minimum and maximum distance wherein the minimum distance corresponds to a smallest realistic distance dictated by one or more physical dimensions of the optoelectronic system (200), the system (200) comprising:

a plurality of illumination modules (202A, 202B), wherein each illumination module (202A, 202B) is operable to generate a respective light pattern (203A, 203B) having a different respective period, T; an imaging module (204, 204A, 204B) operable to collect a scene-reflected portion of each of the light patterns (203A, 203B) and being further operable to convert each collected portion into a respective signal set, wherein each scene-reflected portion is **characterized by** a respective plurality of possible disparity values, d, each possible disparity value, d, corresponding to a possible value of depth or distance (Z) wherein each possible disparity value, d, is calculated as an unknown multiple of the period, T, by:

$$d = d_0 + nT;$$

wherein $d_0$ is a minimum disparity value, and n represents a plurality of ambiguity values,

wherein each signal set corresponds to a respective one of the light patterns (203A, 203B);

a processor (208); and

a non-transitory computer-readable medium (206) comprising instructions stored thereon that, when executed by the processor (208), cause the processor (208) to perform operations for determining three-dimensional data of the scene (210) from the signal sets, wherein determining three-dimensional data of the scene (210) comprises identifying an intersection of possible disparity values for the plurality of light patterns (203A, 203B), and to perform further operations including discarding disparity values corresponding to distances smaller than the minimum distance.

10. The optoelectronic system (200) of claim 9, wherein the imaging module (204, 204A, 204B) includes a plurality of pixels.

11. The optoelectronic system (200) of claim 9, wherein each illumination module (202A, 202B) is **characterized by** a baseline (B1, B2), and the baselines (B1, B2) are different from one another; and/or

wherein each illumination module (202A, 202B) has a focusing distance, and the focusing distances are substantially equal; and/or wherein the imaging module (204, 204A, 204B) has an imaging distance, and the imaging distance is substantially equal to any of the focusing distances.

12. The optoelectronic system (200) of claim 11, wherein the periods are substantially different from each other, and the minimum disparity values are substantially different from each other; and, optionally wherein each plurality of ambiguity values is **characterized by** a maximum value related to the minimum distance, and a minimum value substantially equal to zero.

13. The optoelectronic system (200) of claim 9, wherein the non-transitory computer-readable medium (206) comprises instructions stored thereon that, when executed by the processor (208), cause the processor (208) to perform a further operation of deriving the possible disparity values additionally from:

a) the baseline (B1, B2) and the focusing distance of the corresponding illumination module (202A, 202B),
b) the imaging distance of the imaging module (204, 204A, 204B), and
c) the pixel size.

14. The optoelectronic system (200) of any one of claims 9 to 13 wherein each of the illumination modules (202A, 202B) comprises a respective periodic array of light emitting elements.

15. A host device comprising an optoelectronic system (200) according to any one of claims 9 to 14, wherein the host device is operable to use the three-dimensional data of the scene (210) determined by the optoelectronic system (200) for one or more functions executed by the host device.

**Patentansprüche**

1. Verfahren zum Sammeln, über einen Mindestabstand und einen Maximalabstand, von dreidimensionalen Daten einer Szene (210) mittels eines optoelektronischen Systems (200), wobei der Mindestabstand zu einem kleinsten realistischen Abstand korrespondiert, der durch eine oder mehrere physikalische Dimensionen des optoelektronischen Systems (200) vorgegeben ist, das Verfahren aufweisend:

sequentielles Beleuchten der Szene (210) mit einer Vielzahl von Lichtmustern (203A, 203B), wobei jedes Lichtmuster (203A, 203B) eine unterschiedliche jeweilige Periode T hat;
sequentielles Sammeln eines Szenen-reflektierten reflektierten Teils jedes der Lichtmuster und Konvertieren jedes gesammelten Teils in einen jeweiligen Signalsatz, wobei jeder Szenen-reflektierte Teil durch eine jeweilige Vielzahl möglicher Disparitätswerte d gekennzeichnet ist, wobei jeder mögliche Disparitätswert d zu einem möglichen Wert der Tiefe oder des Abstands (Z) korrespondiert, wobei jeder mögliche Disparitätswert d als ein unbekanntes Vielfaches der Periode T berechnet wird, indem:

$$d = d_0 + nT;$$

wobei $d_0$ ein minimaler Disparitätswert ist und n eine Vielzahl von Mehrdeutigkeitswerten darstellt, wobei jeder Signalsatz zu einem jeweiligen der Lichtmuster (203A, 203B) korrespondiert; und
Verwerfen von Disparitätswerten, die zu Abständen korrespondieren, die sind kleiner als der Mindestabstand, und

Ermitteln von dreidimensionalen Daten der Szene (210) aus den Signalsätzen, wobei das Ermitteln von dreidimensionalen Daten der Szene (210) das Identifizieren einer Schnittmenge von möglichen Disparitätswerten für die Vielzahl von Lichtmustern (203A, 203B) aufweist.

2. Verfahren nach Anspruch 1, wobei das sequentielle Beleuchten der Szene (210) mit einer Vielzahl von Lichtmustern (203A, 203B) das Erzeugen jedes Lichtmusters (203A, 203B) von einem jeweiligen Beleuchtungsmodul (202A, 202B) aufweist, und das sequentielle Sammeln des Szenen-reflektierten Teils jedes der Lichtmuster (203A, 203B) das Sammeln der Szenen-reflektierte Teile mit einem Abbildungsmodul (204, 204A, 204B) aufweist, wobei das Abbildungsmodul (204, 204A, 204B) eine Vielzahl von Pixeln aufweist.

3. Verfahren nach Anspruch 2, wobei die Beleuchtungsmodule (202A, 202B) unterschiedliche jeweilige Grundlinien (B, B2) haben und die Beleuchtungsmodule (202A, 202B) im Wesentlichen gleiche Fokussierabstände haben und das Abbildungsmodul (204, 204A, 204B) einen Abbildungsabstand hat; und optional wobei der Abbildungsabstand im Wesentlichen gleich der individuellen Fokussierungsabstände ist.

4. Verfahren nach Anspruch 1, wobei sich die Perioden wesentlich voneinander unterscheiden und die minimalen Disparitätswerte voneinander verschieden sind.

5. Verfahren nach Anspruch 1, wobei jede Vielzahl von Mehrdeutigkeitswerten durch einen Maximalwert, der mit dem Mindestabstand zusammenhängt, und einen Minimalwert, der im Wesentlichen gleich Null ist, gekennzeichnet ist.

6. Verfahren nach Anspruch 1, wobei die möglichen Disparitätswerte zusätzlich abgeleitet werden aus:

   a) der Grundlinie (B1, B2) und dem Fokussierabstand des korrespondierenden Beleuchtungsmoduls (202A, 202B),
   b) dem Abbildungsabstand des Abbildungsmoduls (204, 204A, 204B), und
   c) der Pixelgröße.

7. Verfahren nach Anspruch 6, wobei das Ermitteln der dreidimensionalen Daten der Szene (210) das Ermitteln einer Vielzahl von optoelektronischen Systemkonstanten aufweist; und, optional wobei das Ermitteln dreidimensionaler Daten der Szene die Verwendung mindestens eines Teils der optoelektronischen Systemkonstanten aufweist, um einen Mehrdeutigkeitswert aus der Vielzahl von Mehrdeutigkeitswerten für jedes korrespondierende Lichtmuster (203A, 203B) auszuwählen.

8. Verfahren nach Anspruch 7, das ferner die Verwendung einer Höchstgrenzen-Funktion aufweist, um einen Mehrdeutigkeitswert aus der Vielzahl von Mehrdeutigkeitswerten für mindestens ein korrespondierendes Lichtmuster (203A, 203B) auszuwählen, und das optional die Auswahl eines Disparitätswertes für jedes korrespondierende Lichtmuster (203A, 203B) aus der korrespondierenden Sammlung möglicher Disparitätswerte aufweist, wobei der ausgewählte eine Mehrdeutigkeitswert, der zu demselben Lichtmuster (203A, 203B) korrespondiert, und der minimale Disparitätswert, der zu demselben Lichtmuster (203A, 203B) korrespondiert, verwendet werden.

9. Optoelektronisches System (200) zum Sammeln dreidimensionaler Daten einer Szene (210) über einen Mindestabstand und einen Maximalabstand, wobei der Mindestabstand zu einem kleinsten realistischen Abstand korrespondiert, der durch eine oder mehrere physikalische Abmessungen des optoelektronischen Systems (200) vorgegeben ist, das System (200) aufweisend:

   eine Vielzahl von Beleuchtungsmodulen (202A, 202B), wobei jedes Beleuchtungsmodul (202A, 202B) so betrieben werden kann, dass es ein jeweiliges Lichtmuster (203A, 203B) mit einer unterschiedlichen jeweiligen Periode T erzeugt; ein Abbildungsmodul (204, 204A, 204B), das so betreibbar ist, dass es einen Szenen-reflektierten Teil jedes der Lichtmuster (203A, 203B) sammelt, und das ferner so betreibbar ist, dass es jeden gesammelten Teil in einen jeweiligen Signalsatz umwandelt, wobei jeder Szenen-reflektierte Teil durch eine jeweilige Vielzahl möglicher Disparitätswerte d gekennzeichnet ist, wobei jeder mögliche Disparitätswert d zu einem möglichen Wert der Tiefe oder des Abstands (Z) korrespondiert, wobei jeder mögliche Disparitätswert d als ein unbekanntes Vielfaches der Periode T berechnet wird, indem:

$$d = d_0 + nT;$$

   wobei $d_0$ ein minimaler Disparitätswert ist und n eine Vielzahl von Mehrdeutigkeitswerten darstellt, wobei jeder Signalsatz zu jeweils einem der Lichtmuster (203A, 203B) korrespondiert; einen Prozessor (208); und ein nicht-flüchtiges computerlesbares Medium (206), auf dem Instruktionen gespeichert sind, die, wenn sie von dem Prozessor (208) ausgeführt werden, den Prozessor (208) veranlassen, Operationen zum Ermitteln dreidimensionaler Daten der Szene (210) aus den Signalsätzen durchzuführen, wobei das Ermitteln dreidimensionaler Daten der Szene (210) das Identifizieren eines Schnittpunkts möglicher Disparitätswerte für die Vielzahl von Lichtmustern (203A, 203B) und das Durchführen weiterer Operationen einschließlich des Verwerfens von Disparitätswerten, die zu Abständen korrespondieren, die kleiner als der Mindestabstand sind, aufweist.

10. Optoelektronisches System (200) nach Anspruch 9, wobei das Abbildungsmodul (204, 204A, 204B) eine Vielzahl von Pixeln aufweist.

11. Optoelektronisches System (200) nach Anspruch 9, wobei jedes Beleuchtungsmodul (202A, 202B) durch eine Grundlinie (B1, B2) gekennzeichnet ist und die Grundlinien (B1, B2) voneinander verschieden sind; und/oder

    wobei jedes Beleuchtungsmodul (202A, 202B) einen Fokussierabstand hat und die Fokussierabstände im Wesentlichen gleich sind; und/oder wobei das Abbildungsmodul (204, 204A, 204B) einen Abbildungsabstand aufweist und der Abbildungsabstand im Wesentlichen gleich eines der Fokussierabstände ist.

12. Optoelektronisches System (200) nach Anspruch 11, wobei die Perioden wesentlich voneinander verschieden sind und die minimalen Disparitätswerte wesentlich voneinander verschieden sind; und optional wobei jede Vielzahl von Mehrdeutigkeitswerten durch einen Maximalwert, der mit dem Mindestabstand zusammenhängt, und einen Minimalwert, der im Wesentlichen gleich Null ist, gekennzeichnet ist.

13. Optoelektronisches System (200) nach Anspruch 9, wobei das nicht-flüchtige computerlesbare Medium (206) darauf gespeicherte Instruktionen aufweist, die, wenn sie von dem Prozessor (208) ausgeführt werden, den Prozessor (208) veranlassen, eine weitere Operation der Ableitung der möglichen Disparitätswerte zusätzlich auszuführen:

    a) die Grundlinie (B1, B2) und den Fokussierabstand des korrespondierenden Beleuchtungsmoduls (202A, 202B),
    b) den Abbildungsabstand des Bildgebungsmoduls (204, 204A, 204B), und
    c) die Pixelgröße.

14. Optoelektronische System (200) nach einem der Ansprüche 9 bis 13, wobei jedes der Beleuchtungsmodule (202A, 202B) eine korrespondierende periodische Anordnung von lichtemittierenden Elementen aufweist.

15. Host-Vorrichtung aufweisend ein optoelektronisches System (200) nach einem der Ansprüche 9 bis 14, wobei die Host-Vorrichtung so betreibbar ist, dass sie die von dem optoelektronischen System (200) ermittelten dreidimensionalen Daten der Szene (210) für eine oder mehrere von der Host-Vorrichtung ausgeführte Funktionen verwendet.

## Revendications

1. Procédé de collecte, sur une distance minimale et maximale, de données tridimensionnelles d'une scène (210) en utilisant un système optoélectronique (200), la distance minimale correspondant à une plus petite distance réaliste dictée par une ou plusieurs dimensions physiques du système optoélectronique (200), le procédé comprenant :

    l'éclairage séquentiel de la scène (210) avec une pluralité de motifs lumineux (203A, 203B), où chaque motif lumineux (203A, 203B) a une période respective différente, T ;
    la collecte séquentielle d'une partie réfléchie par la scène de chacun des motifs lumineux et la conversion de chaque partie collectée en un ensemble de signaux respectifs, où chaque partie réfléchie par la scène est **caractérisée par** une pluralité respective de valeurs de disparité possibles, d, chaque valeur de disparité possible, d, correspondant à une valeur possible de profondeur ou de distance (Z) dans laquelle chaque valeur de disparité possible, d, est calculée comme un multiple inconnu de la période, T, par :

$$d = d_0 + nT \; ;$$

    où $d_0$ est une valeur de disparité minimale, et n représente une pluralité de valeurs d'ambiguïté, où chaque ensemble de signaux correspond à un respectif des motifs lumineux (203A, 203B) ; et
    l'élimination de valeurs de disparité correspondant à des distances inférieures à la distance minimale, et
    la détermination de données tridimensionnelles de la scène (210) à partir des ensembles de signaux, la détermination des données tridimensionnelles de la scène (210) comprenant l'identification d'une intersection de valeurs de disparité possibles pour la pluralité de motifs lumineux (203A, 203B).

2. Procédé selon la revendication 1, dans lequel l'éclairage séquentiel de la scène (210) avec une pluralité de motifs lumineux (203A, 203B) comprend la génération de chaque motif lumineux (203A, 203B) à partir d'un module d'éclairage respectif (202A, 202B), et la collecte séquentielle de la partie réfléchie par la scène de chacun des motifs lumineux (203A, 203B) comprend la collecte des parties réfléchies par la scène avec un module d'imagerie (204, 204A, 204B) dans lequel le module d'imagerie (204, 204A, 204B) a une pluralité de pixels.

3.   Procédé selon la revendication 2, dans lequel les modules d'éclairage (202A, 202B) ont différentes lignes de base respectives (B, B2), et les modules d'éclairage (202A, 202B) ont des distances de focalisation sensiblement égales et le module d'imagerie (204, 204A, 204B) a une distance d'imagerie ; et, en option

    dans lequel la distance d'imagerie est sensiblement égale à une distance de focalisation individuelle.

4.   Procédé selon la revendication 1, dans lequel les périodes sont sensiblement différentes les unes des autres, et les valeurs de disparité minimales sont différentes les unes des autres.

5.   Procédé selon la revendication 1, dans lequel chaque pluralité de valeurs d'ambiguïté est **caractérisée par** une valeur maximale liée à la distance minimale, et une valeur minimale sensiblement égale à zéro.

6.   Procédé selon la revendication 1, dans lequel les valeurs de disparité possibles sont en outre dérivées de :

    a) la ligne de base (B1, B2) et la distance de focalisation du module d'éclairage correspondant (202A, 202B),
    b) la distance d'imagerie du module d'imagerie (204, 204A, 204B), et
    c) la taille des pixels.

7.   Procédé selon la revendication 6, dans lequel la détermination de données tridimensionnelles de la scène (210) comprend la détermination d'une pluralité de constantes de système optoélectronique ; et, éventuellement,

    dans lequel la détermination de données tridimensionnelles de la scène comprend l'utilisation d'au moins une partie des constantes de système optoélectronique pour sélectionner une valeur d'ambiguïté parmi la pluralité de valeurs d'ambiguïté pour chaque motif lumineux correspondant (203A, 203B).

8.   Procédé selon la revendication 7, comprenant en outre l'utilisation d'une fonction de plafond pour sélectionner une valeur d'ambiguïté parmi la pluralité de valeurs d'ambiguïté pour au moins un motif lumineux correspondant (203A, 203B), et, en option,

comprenant la sélection d'une valeur de disparité pour chaque motif lumineux correspondant (203A, 203B) dans la collection correspondante de valeurs de disparité possibles en utilisant ladite une valeur d'ambiguïté sélectionnée correspondant au même motif lumineux (203A, 203B) et la valeur de disparité minimale correspondant au même motif lumineux (203A, 203B).

9.   Système optoélectronique (200) pour collecter des données tridimensionnelles d'une scène (210) sur une distance minimale et maximale, la distance minimale correspondant à une plus petite distance réaliste dictée par une ou plusieurs dimensions physiques du système optoélectronique (200), le système (200) comprenant :

    une pluralité de modules d'éclairage (202A, 202B), où chaque module d'éclairage (202A, 202B) est conçu pour générer un motif lumineux respectif (203A, 203B) ayant une période respective différente, T ;
    un module d'imagerie (204, 204A, 204B) conçu pour collecter une partie réfléchie par la scène de chacun des motifs lumineux (203A, 203B) et étant en outre conçu pour convertir chaque partie collectée en un ensemble de signaux respectifs, dans lequel chaque partie réfléchie par la scène est **caractérisée par** une pluralité respective de valeurs de disparité possibles, d, chaque valeur de disparité possible, d, correspondant à une valeur possible de profondeur ou de distance (Z) dans laquelle chaque valeur de disparité possible, d, est calculée comme un multiple inconnu de la période, T, par :

$$d = d_0 + nT \ ;$$

    où $d_0$ est une valeur de disparité minimale, et n représente une pluralité de valeurs d'ambiguïté, où chaque ensemble de signaux correspond à un respectif des motifs lumineux (203A, 203B) ;
    un processeur (208) ; et
    un support lisible par ordinateur non transitoire (206) comprenant des instructions stockées sur celui-ci qui, lorsqu'elles sont exécutées par le processeur (208), amènent le processeur (208) à effectuer des opérations pour déterminer des données tridimensionnelles de la scène (210) à partir des ensembles de signaux, la détermination de données tridimensionnelles de la scène (210) comprenant l'identification d'une intersection de valeurs de disparité possibles pour la pluralité de motifs lumineux (203A, 203B), et à effectuer d'autres opérations comprenant l'élimination de valeurs de disparité correspondant à des distances inférieures à la distance minimale.

10. Système optoélectronique (200) selon la revendication 9, dans lequel le module d'imagerie (204, 204A, 204B) comprend une pluralité de pixels.

11. Système optoélectronique (200) selon la revendication 9, dans lequel chaque module d'éclairage (202A, 202B) est **caractérisé par** une ligne de base (B1, B2), et les lignes de base (B1, B2) sont différentes l'une de l'autre ; et/ou

     dans lequel chaque module d'éclairage (202A, 202B) a une distance de focalisation, et les distances de focalisation sont sensiblement égales ; et/ou
     dans lequel le module d'imagerie (204, 204A, 204B) a une distance d'imagerie, et la distance d'imagerie est sensiblement égale à n'importe laquelle des distances de focalisation.

12. Système optoélectronique (200) selon la revendication 11, dans lequel les périodes sont sensiblement différentes les unes des autres, et les valeurs de disparité minimales sont sensiblement différentes les unes des autres ; et, en option
     dans lequel chaque pluralité de valeurs d'ambiguïté est **caractérisée par** une valeur maximale liée à la distance minimale, et une valeur minimale sensiblement égale à zéro.

13. Système optoélectronique (200) selon la revendication 9, dans lequel le support lisible par ordinateur non transitoire (206) comprend des instructions stockées sur celui-ci qui, lorsqu'elles sont exécutées par le processeur (208), amènent le processeur (208) à effectuer une autre opération consistant à dériver les valeurs de disparité possibles en plus à partir de :

     a) la ligne de base (B1, B2) et la distance de focalisation du module d'éclairage correspondant (202A, 202B),
     b) la distance d'imagerie du module d'imagerie (204, 204A, 204B), et
     c) la taille des pixels.

14. Système optoélectronique (200) selon l'une quelconque des revendications 9 à 13, dans lequel chacun des modules d'éclairage (202A, 202B) comprend un réseau périodique respectif d'éléments émetteurs de lumière.

15. Dispositif hôte comprenant un système optoélectronique (200) selon l'une quelconque des revendications 9 à 14, dans lequel le dispositif hôte est conçu pour utiliser les données tridimensionnelles de la scène (210) déterminées par le système optoélectronique (200) pour une ou plusieurs fonctions exécutées par le dispositif hôte.

SEQUENTIALLY ILLUMINATE THE SCENE WITH
MULTIPLE LIGHT PATTERNS (100)

COLLECT SEQUENTIALLY A SCENE-
REFLECTED PORTION
OF EACH OF THE LIGHT PATTERNS (102)

CONVERT EACH COLLECTED PORTION INTO A
SIGNAL SET (104)

DETERMINE CANDIDATE THREE-DIMENSIONAL
DATA SETS (106)

DETERMINE THREE-DIMENSIONAL DATA OF
THE SCENE FROM THE CANDIDATE THREE-
DIMENSIONAL DATA SETS (108)

# FIG. 1

203B

Pattern

203A

Pattern

Camera FOV

210

200

202B

202A

Z

204

208

206

**FIG. 2**

FIG. 3

FIG. 4

SYSTEM CALIBRATION (502)

ACQUIRE FIRST IMAGE IN RESPONSE TO THE FIRST ILLUMINATION MODULE PROJECTING A FIRST LIGHT PATTERN WHILE THE SECOND ILLUMINATION MODULE IS OFF (504)

↓

SAVE FIRST IMAGE (506)

↓

ACQUIRE SECOND IMAGE IN RESPONSE TO THE SECOND ILLUMINATION MODULE PROJECTING A SECOND LIGHT PATTERN WHILE THE FIRST ILLUMINATION MODULE IS OFF (508)

↓

SAVE SECOND IMAGE (510)

CAPTURE IMAGES OF THE SCENE USING, SEQUENTIALLY, THE FIRST AND SECOND ILLUMINATION MODULES (512)

ACQUIRE AND STORE A FIRST IMAGE OF THE SCENE WHILE THE FIRST ILLUMINATION MODULE PROJECTS THE FIRST LIGHT PATTERN ONTO THE SCENE (514)

↓

ACQUIRE AND STORE A SECOND IMAGE OF THE SCENE WHILE THE SECOND ILLUMINATION MODULE PROJECTS THE SECOND LIGHT PATTERN ONTO THE SCENE (516)

↓

TO FIG. 5B

**FIG. 5A**

FROM FIG. 5A

COMPUTE DEPTH BASED ON SIGNALS
REPRESENTING THE ACQUIRED IMAGES
(518)

COMPARE THE FIRST IMAGE TO A FIRST REFERENCE
IMAGE AND COMPUTE A FIRST SET OF POSSIBLE
DISPARITY VALUES BASED ON THE COMPARISON
(520)

COMPARE THE SECOND IMAGE TO A SECOND
REFERENCE IMAGE
AND COMPUTE A SECOND SET OF POSSIBLE DISPARITY
VALUES BASED ON THE COMPARISON
(522)

COMPUTE THE INTERSECTION OF THE FIRST AND
SECOND SETS OF POSSIBLE DISPARITY VALUES
(524)

ELIMINATE DISPARITY VALUES THAT ARE TOO LARGE
(i.e., CORRESPONDING TO DEPTH VALUES THAT ARE
TOO SMALL) TO DERIVE A FINAL DEPTH VALUE
(526)

# FIG. 5B

Camera FOV   Pattern 2   Z   Pattern 1   Camera FOV

204A   202A   202B   204B

206

208

**FIG. 6**

EP 3 688 407 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62563880
- US 8325350 B2
- US 2009195772 A1
- US 6559954 B2